(19) Europäisches Patentamt
European Patent Office
Office européen des brevets

(11) EP 1 157 972 A1

(12) EUROPEAN PATENT APPLICATION

(43) Date of publication:
28.11.2001 Bulletin 2001/48

(51) Int Cl.7: C02F 1/72

(21) Application number: 01600012.7

(22) Date of filing: 25.05.2001

(84) Designated Contracting States:
AT BE CH CY DE DK ES FI FR GB GR IE IT LI LU MC NL PT SE TR
Designated Extension States:
AL LT LV MK RO SI

(30) Priority: 26.05.2000 GR 2000100177

(71) Applicants:
- Vlissidis, Apostolos
  Agios Stefanos, Attica (GR)
- Kyprianou, Dimosthenes
  Egomi, Nicosia (CY)

(72) Inventors:
- Vlissidis, Apostolos
  Agios Stefanos, Attica (GR)
- Kyprianou, Dimosthenes
  Egomi, Nicosia (CY)

(74) Representative: Papaconstantinou, Helen G.
2, Coumbari Street
106 74 Athens (GR)

# (54) A method of processing oil-plant wastes

(57) The present invention relates to a method of processing the liquid wastes of olive oil-extracting plants employing ferrous cations and hydrogen peroxide (Fenton reagents) as well as to the organo-humic fertilizer, obtained from the exploitation of the resulting chemical and organic sludge, and of the oxidized liquids, through syn-composting and humus-transforming procedures with crushed olive stone or cotton residues or other agricultural byproducts. The oxidized liquid wastes that remain after the above processing can then be further processed efficiently by means of biological processes until their complete purification. Application to individual oil-extracting presses as well as to large plants for handling wastes from oil-extracting presses and/or for the production of fertilizers.

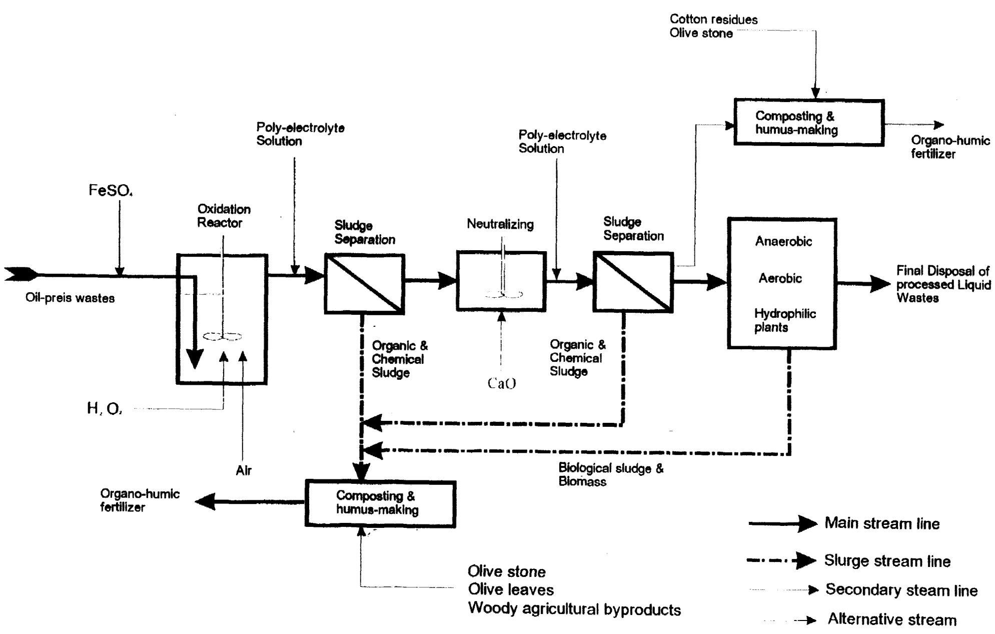


Figure 1

EP 1 157 972 A1

## Description

The present invention relates generally to the processing of liquid wastes of olive oil extracting plants. It concerns particularly a method of processing liquid wastes of olive oil extracting plants using the Fenton oxidative processes as well as the utilization of the resulting, by means of oxidation and coagulation, chemical and organic sludge through their syn-composting and humus-transforming with olive stone and other woody organic byproducts.

The functioning of the oil-extracting presses is seasonal and, depending on the region, is situated from about November through sometimes June. From the production of oil there result large quantities of waste, heavily loaded with toxic organic load (phenols, tannines, etc.) whose total volume amounts to approximately 1,500,000 tons per year.

The mean amount of the various products that result from 100 kg of olives is as follows: 4 kg of leaves, 40 kg of husk,120 kg of waste, 25 kg of oil. From the husk there is additionally produced: 8-9 kg of seed-oil and 15 kg of crushed stone. The ratio of the volume of waste to the weight of oil amounts to approximately 4-5 $m^3$ per ton.

The essential properties of the waste depends on the process of production and the quantity of the added water. They range generally in the following limits:

$$pH = 4\text{-}6,$$

$$BOD_5 = 20\text{-}60 \text{ g/l},$$

$$COD = 90\text{-}170 \text{ g/l},$$

$$TOC = 25\text{-}45 \text{ g/l},$$

while the contained toxic compounds are phenols, tannines and dyes.

The severe environmental problems caused by the liquid wastes of oil-extracting plants have forced the various oil-producing countries to take measures to overcome them. Among those measures there is included the support of research aiming to discover methods of handling those liquid wastes.

These methods can be classified, from the point of view of the intended goal, into two general categories:

a) Methods that have the goal of alleviating the polluting load with the purpose to liberate them into the environment without adverse consequences.
b) Methods that have the goal of yielding useful products from the processing of the waste (e.g., methane, dyes. microbial protein for animal feed, compost).

The first category includes the following methods:

a1) **Evaporation** of the waste in open pools. The waste material is stored during the period of its production (3-4 months) into open shallow pools and remains there until it is evaporated during the rest of the year (8-9 months). This method, although it is the only officially recommended by the Health Authorities, poses many problems of noxious odors during the summer and in addition the remaining sludge continues to be toxic. Besides, it necessitates large areas.
a2) **Condensation** of the liquid waste by means of evaporation in multistage condensers. This method has high investment and working cost. It produces a liquid waste of low polluting load and a condensate that is difficult to process.
a3) **Coagulation-precipitation** and fat removal by the use of lime and ferrous salts. This method decreases by only about 40% the polluting load and produces large quantities of sludge.
a4) **Reverse osmosis.** This method can clean the liquids by as much as 90% but leaves a considerable quantity of sludge and is extremely costly (110 - 125 USD/$m^3$ of waste).
a5) **Burning of the wastes.** This is possible in principle, due to the high enthalpy of the organic constituents. It necessitates in return high investment installations as well as the existence of a system of utilization of the output flue gases (Thermal power generating plant). Otherwise, the smell from the combustion prohibits the existence of processing units near inhabited areas.
a6) **Oxidation with oxygen** under high pressure. This achieves up to 95% clean-up, but requires the separation, before processing, of the sludge, whose disposal continues to constitute a serious environmental problem and has

a high investment and working cost.

a7) **Oxidation with chlorine** inside electrolytic cells. This achieves up to 95% clean-up, but requires a high energy consumption (20 kWh/kg COD), the waste is enriched with chlorinated organic compounds and has a high investment and working cost.

In the second category are included the following methods:

b1) **Production of microbial protein.** Despite its advantages from the point of view of cost, it has the disadvantage of low efficiency (50%) of the polluting load. There arises therefore the problem of its further processing. In addition, the demand for proteinaceous animal feed presents large fluctuations in the market worldwide.

b2) **Anaerobic transformation to biogas.** This has a low efficiency due to the toxicity of the waste and demands high investment and working cost. In addition the effluent of the process continues to be toxic to the environment and therefore requires its further processing.

β3) **Wet composting of the waste.** This is based on the use of special nitrobacteria which on one hand destroy the toxic phenols and on the other enrich the waste with nitrogen in such a way that it can be disposed to the environment as a liquid fertilizer. The method doesn't decrease the polluting load of the waste and therefore the waste continues to constitute a problem for the environment and also in practice it has been shown that the specialized cultures of nitrobacteria cannot be active in the competitive environment of the waste and they become quickly inactive.

b4) **Syn-composting of the waste with olive stone.** This is based on the high polluting load of the waste which can sufficiently feed the humus-making microorganisms with nutrients and humidity in a process of composting of the olive stone. In that way, from the liquid and solid waste of oil-extracting plants a very good organo-humic soil fertilizer. This method has many advantages because it produces no liquid waste, has low investment and operating cost and the product can contribute a large part of the cost of the waste processing. A drawback of the method is the fact that the quantity of olive stone is not sufficient for all the waste produced and hence either an additional woody substrate or condensation of the waste is required. In the latter case the condensation of the toxic compounds from the waste will hinder the process of composting and decrease the soil-enhancing quality of the final product.

Thus, from all the methods of processing of oil-extracting plant wastes, their syn-composting with olive stone constitutes the most efficient on the condition that they will be condensed and detoxicated before composting.

The present invention has the object to overcome the above mentioned drawbacks. It is especially directed to a method of syn-composting the oil-extracting plant wastes with olive stone. on which the wastes are condensed and detoxicated before syn-composting.

An object of the invention is the realization of this condensation and detoxication using the Fenton oxidative processes. Another object of the invention is to decrease the quantity of wastes in such a degree as to be in a substantially correct ratio as compared to the produced olive stone such that the syn-composting is possible. An additional object of the present invention is a method of syn-composting of the liquid and solid wastes of the oil-extracting plants which yields a product with excellent soil-enhancing properties. A further object of the present invention is a complete, environmentally friendly, efficient and feasible method for the complete handling all of the produced, by the process of olive oil producing, solid and liquid wastes.

For this purpose, the present invention has as an object a method of processing of the liquid wastes of oil-extracting plants to obtain non-toxic chemical and organic sludge, characterized in that said liquid wastes are subjected to oxidation and coagulation using ferrous cations and hydrogen peroxide or air (Fenton reactants) and that the obtained chemical and organic sludge is separated by filtering.

According to an embodiment of the invention, said method comprises the step of: introducing said liquid wastes in an oxidation reactor and adding thereto ferrous cations and hydrogen peroxide.

According to an alternative embodiment of the present invention, said method comprises the steps of:

a) introducing said liquid wastes into a first oxidation reactor:
b) adding to the first oxidation reactor ferrous cations;
c) filtering the product to remove the sludge produced;
d) introducing the filtrate into a second oxidation reactor: and
e) adding to the second oxidation reactor ferrous cations and hydrogen peroxide.

According to another aspect of the present invention, there is provided a method of processing the liquid wastes of oil-extracting plants in which the finally obtained liquid waste is sufficiently detoxicated for a biological processing thereof to be feasible and effective. In this way there is achieved a complete handling of all the wastes,

liquid as well as solid. from the process of producing olive oil.

According to another aspect of the present invention, there is provided a method of processing the liquid wastes of oil-extracting plants in which the finally obtained liquid waste can by subjected to syn-composting with agricultural byproducts such as cotton processing residues and olive stone.

In another aspect, the present invention provides the product of the above method. In a particularly advantageous embodiment, this product is used as an organo-humic fertilizer.

Those and other aspects of the present invention, as well as particular features and advantages thereof will become clear from the following detailed description and the appended drawings, in which:

figure 1 shows a block diagram of the process according to a first embodiment of the invention;
figure 2 shows a block diagram of the process according to a second embodiment of the invention.

As has already been mentioned, the present invention uses the Fenton oxidative process. The Fenton oxidative process is a method of chemical oxidation and coagulation of organic compounds. It is realized by the addition of hydrogen peroxide ($H_2O_2$) and ferrous sulfate ($FeSO_4$) (Fenton reagent) to the waste. A theoretical explanation of the Fenton oxidative processes is given below, but it is pointed out that this is not limiting the invention nor is it a part thereof.

Under acidic conditions, in the presence of $H_2O_2$, $Fe^{2+}$ and organic substrate, the following redox reactions take place:

$$Fe^{2-} + H_2O_2 \rightarrow Fe^{3+} + HO^- + HO^\bullet \quad (1)$$

$$HO^\bullet + Fe^{2+} \rightarrow Fe^{3+} + HO^- \quad (2)$$

$$HO^\bullet + RH \rightarrow H_2O + R^\bullet \quad (3)$$

$$R^\bullet + Fe^{3+} \rightarrow R^+ + Fe^{2+} \quad (4)$$

Reactions (1) and (2) are initiation and termination reaction, while reactions (3) and (4) are propagation reactions. The hydroxy radicals $HO^\bullet$ can attack and break down the organic compound RH or be captured by $Fe^{2+}$. The radicals $HO^\bullet$ attack the organic compounds in a minimal time and non-selectively, removing hydrogen atoms or added to unsaturated bonds C-C. In addition, the following secondary reactions are possible:

$$HO^\bullet + H_2O_2 \rightarrow H_2O + HO_2^\bullet \quad (5)$$

$$2R^\bullet \rightarrow R\text{-}R \quad (6)$$

Because of reaction (5), $H_2O_2$ captures and deactivates by itself the HO' radicals and thus an increase in its concentration doesn't always lead to an increase of the efficiency of the oxidation. To the dimerization reaction (6) can be attributed the capability of the Fenton reaction to decolorize the organic compounds.

But the desired reaction for the organic radicals ($R^\bullet$ ) is not (6), but (7) below:

$$R^\bullet + O_2 \rightarrow O_2R^\bullet \quad (7)$$

The organic radicals react with the dissolved oxygen and are transformed to $O_2RH^\bullet$, while the lack of oxygen leads to the undesirable recombination of the organic radicals according to reaction (6) and the breaking down of the organic material is slowed down. The consumption of $H_2O_2$ can be considerably diminished by adding oxygen or air to the waste. It is desirable that the quantity of $Fe^{2+}$ be as small as possible, so that reaction (2) which is using $HO^\bullet$ is not favored.

The $Fe^{3+}$ ions produced react with the hydroxyl ions to form complexes:

$$[Fe(H_2O)_6]^{3-} + H_2O \rightleftharpoons [Fe(H_2O)_5OH]^{2-} + H_3O^- \quad (8)$$

$$[Fe(H_2O)_5OH]^{2-} + H_2O \rightleftharpoons [Fe(H_2O)_4(OH)_2]^- + H_3O^- \quad (9)$$

In the pH range from 3,5 to 7, the above complexes have the tendency to polymerize, while successive hydrolytic reactions yield complexes with o greater hydroxyl number:

$$2[Fe(H_2O)_5OH]^{2-} \rightleftharpoons [Fe_2(H_2O)_8(OH)_2]^{4-} + 2H_2O \quad (10)$$

$$[Fe_2(H_2O)_8(OH)_2]^{4-} + H_2O \rightleftharpoons [Fe_2(H_2O)_7(OH)_3]^{3-} + H_3O^+ \quad (11)$$

$$[Fe_2(H_2O)_7(OH)_3]^{3-} + [Fe(H_2O)_5OH]^{2-} \rightleftharpoons [Fe_3(H_2O)_5(OH)_4]^{5+} + 7H_2O \quad (12)$$

Therefore, with a series of hydrolytic reactions, which are possibly accompanied by dehydration reactions, complexes of $Fe^{3+}$ and hydroxyl are formed. As the charge of the $Fe^{3-}$ complexes is decreasing due to the increase of the number of hydroxyl ions, the repulsion between ions is reduced and their tendency to polymerize is increased. There are possibly produced some colloidal polymers of hydroxyl, and finally insoluble accretions of ferric oxide hydrate, which precipitate. It is to these accretions that the coagulation action of Fenton reagent is due. Organic molecules as well as suspended particles are entrained by the accretions and precipitate. A considerable percentage of the decrease of the waste's COD number, after the Fenton process, is due to this action of coagulation-aggregation. During the chemical oxidation, a large number of small aggregates (flocks) is produced, which have a low rate of precipitation. The rate of precipitation increases considerably by the addition of poly-electrolytes. When calcium hydroxide is used as the aggregating reagent, a reaction with the ferrous and ferric ions, as well as with the sulfate and carbonate radicals, takes place, yielding insoluble ferrous hydroxide, calcium sulfate and carbonate, that constitute the coagulation nuclei, according to the following reactions:

$$Ca(OH)_2 + H_2CO_3 \rightleftharpoons CaCO_3\downarrow + 2H_2O \quad (13)$$

$$FeSO_4 \cdot 7H_2O + Ca(HCO_3)_2 \rightleftharpoons Fe(HCO_3)_2 + CaSO_4 + 7H_2O \quad (14)$$

$$Fe(HCO_3)_2 \rightleftharpoons Fe(OH)_2 + 2CO_2 \quad (15)$$

Further addition of calcium hydroxide gives:

$$Fe(HCO_3)_2 + 2Ca(OH)_2 \rightleftharpoons Fe(OH)_2 + 2CaCO_3 + 2H_2O \quad (16)$$

Thereafter. the ferrous hydroxide ($Fe(OH)_2$) produced is oxidized by the dissolved oxygen to ferric hydroxide ($Fe(OH)_3$):

$$4Fe(OH)_2 + O_2 + 2H_2O \rightleftharpoons 4Fe(OH)_3\downarrow \quad (17)$$

The oxidation is favored by the high pH value which results from the addition of calcium hydroxide.

$$Fe_2(SO_4)_3 + 3Ca(HCO_3)_2 \rightleftharpoons 3CaSO_4 + 2Fe(OH)_3\downarrow + 6CO_2 \quad (18)$$

while its combination with calcium hydroxide gives:

$$Fe_2(SO_4)_3 + 3Ca(OH)_2 \rightleftharpoons 3CaSO_4 + 2Fe(OH)_3 \downarrow \qquad (19)$$

The insoluble precipitate $Fe(OH)_3$ that is formed in both cases entrains the suspended colloidal particles.

With the Fenton procedures, soluble dyes are successfully decolorized, while with the coagulation procedure insoluble dyes (e.g., dispersion dyes) are successfully decolorized. Th Fenton process combines oxidation and aggregation and also increases the concentration of dissolved oxygen. For a satisfactory decolorizing of soluble dyes to be achieved, the pH must be below 3,5. With a pH higher than 4, the $Fe^{2+}$ ions are unstable and are easily transformed to $Fe^{3+}$ ions, which have the tendency to form complexes with hydroxyl. With a pH more than 9, these complexes form $[Fe(OH)_4]^-$. In addition, $H_2O_2$ is unstable under alkaline pH and looses its oxidative power because of its break down to oxygen and water. For those reasons, the $H_2O_2$-$Fe^{2+}$ system looses its oxidative action with increasing pH.

Therefore, the combination of Fenton oxidation under low pH, followed by coagulation under high pH achieves a considerable overall decolorizing of the wastes of oil-extracting plants, because the soluble as well as the insoluble dyes are removed.

**Factors that influence the effectiveness of the overall procedure are:**

a) **pH**. The pH plays a decisive role in the efficiency of the oxidation caused by $HO^\bullet$ , due to the dependence of the oxidative potential from pH ($E^0$= 2.8V and $E^{14}$=1.95V). In addition, the concentration of inorganic carbon is influenced by pH. $HO^\bullet$ is deactivated by the carbonate and bicarbonate ions due to the following reactions:

$$HO^\bullet + CO_3^{2-} \rightarrow OH- + CO_3^{\bullet -} \qquad (20)$$

$$HO^\bullet + HCO_3^- \rightarrow H_2O + CO_3^{\bullet -} \qquad (21)$$

Thus, to ensure sufficient concentrations of $HO^\bullet$, it is necessary to remove the carbonate ions, whose concentration is zero at pH below 3. The optimum pH range to conduct the oxidation is between 2 and 3. $H_2O_2$ is unstable under alkaline pH and looses its oxidative power because of its break down to oxygen and water. Thus, the $H_2O_2$-$Fe^{2+}$ system looses its oxidative power with increasing pH.

b) The quantities of $\mathbf{H_2O_2}$ and $\mathbf{FeSO_4}$ added. An increase in the quantities of $H_2O_2$ and $FeSO_4$ added increases the destroyed amount of COD. When the ratio of $H_2O_2/FeSO_4$ is more than one, the chemical oxidation prevails, while the chemical aggregation prevails when it is less than one. The discharged waste must contain not more than 2,5 ppm of dissolved iron ions. The chemical aggregation reduces the concentration of the dissolved iron in the waste and this is an additional advantage thereof (what is meant is the addition of PAC and pol as compared with waiting for the precipitation to take place by itself) and reduces considerably the time needed for the precipitation. Additionally, the decolorizing of the waste is increased. Also, with the increase in $H_2O_2$, the decolorizing of the waste is increased.

Even without the addition of $H_2O_2$, and with only the addition of $Fe^{2+}$, there can be seen a COD decrease. This is because $Fe^{2+}$ is oxidized by the dissolved oxygen to $Fe^{3+}$ and peroxide radical ($O_2^{-\bullet}$) which, in an acidic medium, produces $H_2O_2$ according to the reactions:

$$Fe^{2+} + O_2 \rightarrow Fe^{3+} + O_2^{-\bullet} \qquad (22)$$

$$2O_2^{-\bullet} + 2H^+ \rightarrow H_2O_2 + O_2 \qquad (23)$$

c) **Temperature**. As the optimum temperature for conducting the Fenton reaction is considered to be 30°C. At lower temperatures (even in the range of 20-30°C) there is seen an abrupt increase of the final COD. due to the

low rate of reaction. At higher temperatures, the increase in the final COD is much more smooth and is due to the decrease of the activity of $H_2O_2$ because of its breakdown.

d) **Oxidation time.** The time required for efficient oxidation depends on the temperature. At lower temperatures it is less as compared with higher temperatures.

From the application of the Fenton reactions for the processing of the liquid wastes of oil-extracting plants the following advantages ensue:

a) It is an efficient procedure in terms of the decrease of the polluting load. It achieves commonly a decrease in COD (up to 90%), of the suspended solids (up to 95%), of the fatty organic compounds (up to 100%), of the dyes (up to 97%), of the total phenolic compounds (up to 80%) and of the turbidity (up to 60%).
b) Compared with other processing methods of the wastes of oil-extracting plants, the Fenton reactions have the advantage that they don't load the waste with additional toxicity due to the chemical additives, seeing that $H_2O_2$ dissociates to water and the amounts of $FeSO_4$ required are small.
c) The toxicity of the waste after the Fenton procedures is decreased considerably (a decrease in the ratio COD/ $BOD_5$). This decrease is due to the break down of the organic compounds to simpler and more biodegradable ones and thus to the increase of dissolved oxygen, because of the dissociation of $H_2O_2$ to oxygen and water. In addition, the biological processes for the complete disposal of the wastes (anaerobic and aerobic digestion, beds of hydrophilic plants) become very efficient
d) The equipment needed is simple, as is the functioning of the unit. Thus, from one part this technology becomes accessible both financially and functionally for every oil-extracting plant, and from the other the problems due to the seasonal operation of the plants disappear.
e) The chemical and organic sludge produced from the oxidation and coagulation of the wastes in the Fenton process can produce, after their syn-composting with woody byproducts such as olive stone, a fertilizer of very high quality which, as o commercial product, can offer the possibility of amortizing the costs of application of the method of the present invention.

Illustrative installations for the practical application of the method of the present invention are shown in figures 1 and 2.

One such installation (fig. 1 and 2) includes an oxidation reactor which is comprised of a container, a system for stirring the contents of the container, a system for bubbling atmospheric air at the bottom of the container, a system for metering the liquid waste, a system for metering ferrous sulfate ($FeSO_4$), in solid or dissolved state, a system for metering hydrogen peroxide, a system for metering the liquid waste and a system controlling the pH inside the container. The waste may be fed in a continuous or an intermittent way. Then, ferrous sulfate is fed in a ratio of 4-10 kg per $m^3$ of waste. This ratio depends on the polluting load of the waste. The pH is adjusted in the range of from 2 to 4 and then hydrogen peroxide (60%) is introduced in a ratio of 0,2 to 2 liters per kg ferrous ion, the ratio depending again on the polluting load of the waste. The air is fed (without this being necessary) during the whole period of oxidation. The residence time of the waste inside the oxidation reactor is from 1 to 24 hours, depending on the polluting load of the waste. It has been found that the optimal residence time of the waste inside the oxidation reactor is about 1 hour. A larger residence time of the wastes in the oxidative process has the result of decreasing the insoluble organic solids and of increasing of the soluble COD. yielding less satisfactory results both for the processing of the wastes and for the efficiency of the composting of the resulting sludge.

The installation includes a system of neutralizing the oxidized waste either with (preferably) calcium hydroxide or with sodium hydroxide so as to achieve the coagulation and aggregation of the chemical and organic sludge resulting from oxidation. The aggregation of the solids can be assisted with an appropriate poly-electrolyte. If calcium hydroxide is used, an appropriate neutralizing pH is about 8,2. while if sodium hydroxide is used, the appropriate neutralizing pH is about 6,7.

The installation further comprises a resulting sludge separating system using dissolved air (DAF), desiccating beds or centrifuging, or any other method of filtering. A separating process could be applied immediately after oxidation, immediately after neutralizing and aggregating, or after both stages. This depends on the purification requirements of the liquid waste.

In another embodiment (fig. 2), the installation comprises two oxidation stages. The first stage comprises an oxidation reactor which is composed of a container, a contents stirring system, a system for bubbling atmospheric air at the bottom of the container, a system for metering the liquid waste, a system for metering ferrous sulfate ($FeSO_4$), in solid or dissolved state, and a system for metering the liquid waste. Optionally, there may be included a system for metering hydrogen peroxide. The quantity of ferrous sulfate ($FeSO_4$) ranges from 2 to 10 kg per $m^3$ of waste fed. The proportion of ferrous sulfate depends on the pH of the waste and on the quantity of the suspended solids in the waste.

The purpose of the first oxidation stage is to remove the suspended solids and to partially oxidize soluble COD. The residence period of the waste in the first stage must be at least 0,5 hours, with the optimal value being about 1 hour. The mixture of waste and sludge from the first stage is filtered and the filtrate is transferred to the second oxidation stage.

The second oxidation stage of fig. 2 comprises an oxidation reactor which is composed of a container, a system for stirring the contents of the container, a system for metering ferrous sulfate ($FeSO_4$), in solid or dissolved state, a system for metering hydrogen peroxide, a system for metering the liquid waste and a system controlling the pH inside the container. The waste may be fed in a continuous or an intermittent way. Then, ferrous sulfate is fed in a ratio of 1-5 kg per $m^3$ of waste, depending on the initial polluting load of the waste. The pH is adjusted in the range of from 2 to 4 and then hydrogen peroxide (60%) is introduced in a ratio of 0,2 to 2 liters per kg ferrous ion, depending on the polluting load of the waste. The residence period in the second oxidation reactor is from 1 to 2 hours, depending on the polluting load of the waste. During the experiments it was found that the optimum residence period inside the oxidation reactor is 1 hour. Then, the oxidized waste is conveyed to a neutralizing process using an alkali (preferably calcium hydroxide) and to a process of removing of the aggregated solids by filtration. The two oxidative stage procedure has the advantage of needing generally smaller quantities of chemical additives (ferrous sulfate, hydrogen peroxide and calcium hydroxide), the resulting organic and chemical sludge are more appropriate for composting and the final oxidized waste has less suspended solids and soluble COD.

This method comprises either the biological processing of the effluent liquid waste from the separation by anaerobic or aerobic digestion, or the processing on beds of hydrophilic plants (reed beds) or both. This depends upon the purification requirement of the liquid waste.

The method comprises a syn-composting unit for the resulting sludge (chemical and biological) with olive stone or other woody agricultural and/or animal feed byproducts. The proportions of mixing must be such that the mixture, before composting, has a relative humidity from 30 to 45%. The syn-composting may be carried out in any type of composting reactor.

The method comprises a syn-composting unit of the resulting (chemical and biological) sludge with olive stone or other woody agricultural and/or animal feed byproducts. The ratio of mixing must be such that the mixture has, before composting, a relative humidity of between 30 and 45%. The syn-composting may be performed into a composting reactor of any type. The additional humidity needed during the heat-requiring phase of composting can be supplied by this same liquid. In this way, the fertilizing potential of the final product is increased.

Below are given some examples of practice of the method of the present invention. It is pointed out that the examples are given for the better understanding of the invention and they do not limit its scope in any way.

## Example 1

One ton (1000 kg) of wastes from an oil-extracting plant with the following composition: COD = 200 g/l. $BOD_5$ = 45 g/l, SS = 120 g/l, total phenolic compounds = 18 g/l and pH = 4, was placed with continuous stirring in a container of 2,2 $m^3$ capacity. To this container, 10 kg of solid $FeSO_4.7H_2O$ and then 5 l of a 60% solution of $H_2O_2$ were added. The pH of the mixture was 2,8 without requiring any correction. The mixture remained in the oxidation reactor under stirring and under the above defined conditions for 8 hours and then, after diluting 1:1 with purified water and a slightly anionic poly-electrolyte was added to a concentration of 0.1%, was fed. without neutralization, to a filtration bed. The sludge resulting in this way weighed 400 kg and had a relative humidity of 65%. This sludge was mixed with 340 kg of olive stone and was placed in a stack for composting. The product resulting after being subjected for a month to the composting procedure had the following characteristics: humidity 14%, pH=6.7, water capacity 80%, organic matter 72%, total organic carbon = 42%, total humic compounds = 22%, Germination Index = 310, total phosphorus = 1.2 g/kg, total nitrogen 2.8%, total count of microorganisms = 32 X $10^9$. The filtered liquid from the filtration bed was neutralized with calcium hydroxide at pH=8.2 and the coagulates formed were aggregated using a slightly cationic polyelectrolyte and the total mixture was passed through a sand bed. The filtrate obtained had the following characteristics: COD = 10 g/l, $BOD_5$ = 6.5 g/l, SS = 1 g/l, total phenolic compounds = 1.2 g/l and pH = 8.2. This filtrate was conveyed to an anaerobic digester of the UASBR (Upflow Anaerobic Sludge Blanket Reactor) type which was fed with 1 g COD/g VSS-d. The liquid waste effluent of the anaerobic digestion had the following characteristics: COD = 2 g/l, $BOD_5$ = 0.65 g/l, SS = 0 g/l and pH = 6.9. The total volume of the methane produced was 7,2 $m^3$. The effluent waste from the anaerobic digester was conveyed to a reed bed and fed with an hydraulic loading of 1 $m^3$/100 $m^2$. The final processed waste had the following characteristics: COD = 350 mg/l, $BOD_5$ = 65 mg/l, SS = 80 mg/l, total phenolic compounds = 40 mg/l and pH = 6.9.

## Example 2

One ton (1000 kg) of wastes from an oil-extracting plant similar to those of example 1 was placed with continuous stirring in a container of 2.2 $m^3$ capacity. To this container, 8 kg of solid $FeSO_4.7H_2O$ were added. The pH of

the mixture was 3.8. Stirring of the contents of the reactor was done with air at a rate of 10 $m^3$/h. The mixture remained in the oxidation reactor under stirring and under the above defined conditions for 1 hour and then, after diluting 1:2 with purified water and a slightly anionic poly-electrolyte was added to a concentration of 0.1%, was fed, without neutralization, to a filtration bed that contained olive stone as a filtering medium. The sludge resulting in this way weighed 350 kg and had a relative humidity of 70%. This sludge was mixed with 300 kg of olive stone and was placed in a stack for composting. The filtrate had the following composition: COD = 128 g/l, $BOD_5$ = 40 g/l, SS = 10 g/l, total phenolic compounds = 10 g/l and pH = 3,8 and was put under continual stirring in a 5 $m^3$ container. To this container were added 2 kg of solid $FeSO_4$. $7H_2O$ and then 2 l of a 60% solution of $H_2O_2$. The pH of the mixture was 2.75 without requiring any correction. The mixture remained in the oxidation reactor under stirring and under the above defined conditions for 1 hour and then, after neutralizing with calcium hydroxide (pH = 8.2), a slightly anionic poly-electrolyte was added to a concentration of 0.1% and was fed to a filtration bed with olive stone as the filtering medium. The sludge resulting in this way weighed 100 kg and had a relative humidity of 60%. This sludge was mixed with 80 kg of olive stone and placed for composting on the same stack as above. The product resulting after being subjected for a month to the composting procedure had the following characteristics: humidity 14%, pH=6.9, water capacity 120%, organic matter 69%, total organic carbon = 41%, total humic compounds = 50%, Germination Index = 270, total phosphorus = 1.1 g/kg, total nitrogen 3.2%, total count of microorganisms = 18 X $10^9$. The filtrate obtained had the following characteristics: COD = 3.5 g/l, $BOD_5$ = 2.8 g/l, SS = 0.6 g/l, total phenolic compounds = 0.4 g/l and pH = 8.2. This filtrate was conveyed to an anaerobic digester of the UASBR type which was fed with 1 g COD/g VSS-d. The liquid waste effluent of the anaerobic digestion had the following characteristics: COD = 0.7 g/l, $BOD_5$ = 0.5 g/l, SS = 0 g/l and pH = 6.9. The total volume of the methane produced was 6.5 $m^3$. The effluent waste from the anaerobic digester was conveyed to a reed bed and fed with an hydraulic loading of 2 $m^3$/100 $m^2$. The final processed waste had the following characteristics: COD = 150 mg/l, $BOD_5$ = 28 mg/l, SS = 40 mg/l, total phenolic compounds = 5 mg/l and pH = 7.2.

**Example 3**

One half cubic meter (0.5 $m^3$) of filtrate from example 2 was mixed with one ton (1000 kg) of cotton residues and formed a stack for composting. The stack was upturned every day and further filtrate added in order to keep the humidity around 30-35%. The temperature of the stack increased to 50-60°C and remained at that level for about a month. Then the temperature diminished gradually to air temperature and the stack remained to cure without upturning for a month. The final product of this syn-composting - humus making had the following characteristics: humidity 14%, pH = 6.9, water capacity = 140%, organic matter 75%, total organic carbon = 38%, total humic compounds = 45%, Germination Index = 250, total phosphorus = 0.8 g/kg, total nitrogen = 2.8%, total count of microorganisms = 27 x $10^8$. The finally used weight ratio of oxidized liquid waste to cotton residues was 2:1 respectively.

The above procedure can be effectively applied both to individual oil-extracting presses and to large plants that receive wastes from many oil-extracting presses.

The present invention has been described in terms of specific examples of realization. It must however be pointed out that these examples are not intended to limit the scope of the invention but only to make it clearer. It is understood that many changes and modifications in its details are possible, within the capabilities of the skilled in the art, without thereby departing from the scope of the invention, which is defined in the claims.

## Claims

**1.** Method of processing of the liquid wastes of oil-extracting plants to obtain non-toxic chemical and organic sludge, **characterized in that** said liquid wastes are subjected to oxidation and coagulation using ferrous cations and hydrogen peroxide or air (Fenton reactants) and that the obtained chemical and organic sludge is separated by filtering.

**2.** Method of processing of the liquid wastes of oil-extracting plants according to claim 1, **characterized in that** it includes the step of:

introducing said liquid wastes in an oxidation reactor and adding thereto ferrous cations and hydrogen peroxide.

**3.** Method of processing of the liquid wastes of oil-extracting plants according to claim 1, **characterized in that** it includes the steps of:

a) introducing said liquid wastes into a first oxidation reactor;
b) adding to the first oxidation reactor ferrous cations;

c) filtering the product to remove the sludge produced;
d) introducing the filtrate into a second oxidation reactor; and
e) adding to the second oxidation reactor ferrous cations and hydrogen peroxide.

**4.** Method of processing of the liquid wastes of oil-extracting plants according to any preceding claim, **characterized in that** the chemical and organic sludge resulting after the single step of claim 2 and after the first and/or the second step of claim 3 are subjected to neutralizing with an alkaline solution before their removal.

**5.** Method of processing of the liquid wastes of oil-extracting plants according to claim 3, **characterized in that** per $m^3$ of liquid waste, from 0.5 to 20 kg of ferrous cations and from 0.5 to 20 kg $H_2O_2$ (60%) are added.

**6.** Method of processing of the liquid wastes of oil-extracting plants according to claim 4, **characterized in that** in step b), per $m^3$ of liquid waste, from 0.5 to 20 kg of ferrous cations, and in step e), per $m^3$ of liquid waste, from 0.5 to 20 kg of ferrous cations and from 0.5 to 20 kg $H_2O_2$ (60%) are added.

**7.** Method of processing of the liquid wastes of oil-extracting plants according to any preceding claim, **characterized in that** the hydrogen peroxide can be replaced with air.

**8.** Method of processing of the liquid wastes of oil-extracting plants according to any preceding claim, **characterized in that** the resulting chemical and organic sludge is further subjected to syn-composting with woody organic byproducts.

**9.** Method of processing of the liquid wastes of oil-extracting plants according to any preceding claim, **characterized in that** the resulting liquid filtrate is further subjected to syn-composting with woody organic byproducts.

**10.** Method of processing of the liquid wastes of oil-extracting plants according to claim 8 or 9, **characterized in that** the woody organic byproducts are selected from the group formed from olive stone, olive leaves, residues from cotton processing and other solid agricultural byproducts.

**11.** Method of processing of the liquid wastes of oil-extracting plants according to claim 8, 9 or 10, **characterized in that** said woody organic byproducts are also used as filtration substrate for the separation of the chemical and organic sludge.

**12.** Method of processing of the liquid wastes of oil-extracting plants according to any preceding claim, **characterized in that** the finally obtained liquid waste is sufficiently detoxicated for a biological processing thereof to be feasible and effective.

**13.** Method of processing of the liquid wastes of oil-extracting plants according to any preceding claim, **characterized in that** it completely handles all the wastes, solid as well as liquid, from the process of producing olive oil..

**13.** Product obtained according to any of the preceding claims.

**14.** Product according to claim 13, used as a fertilizer.

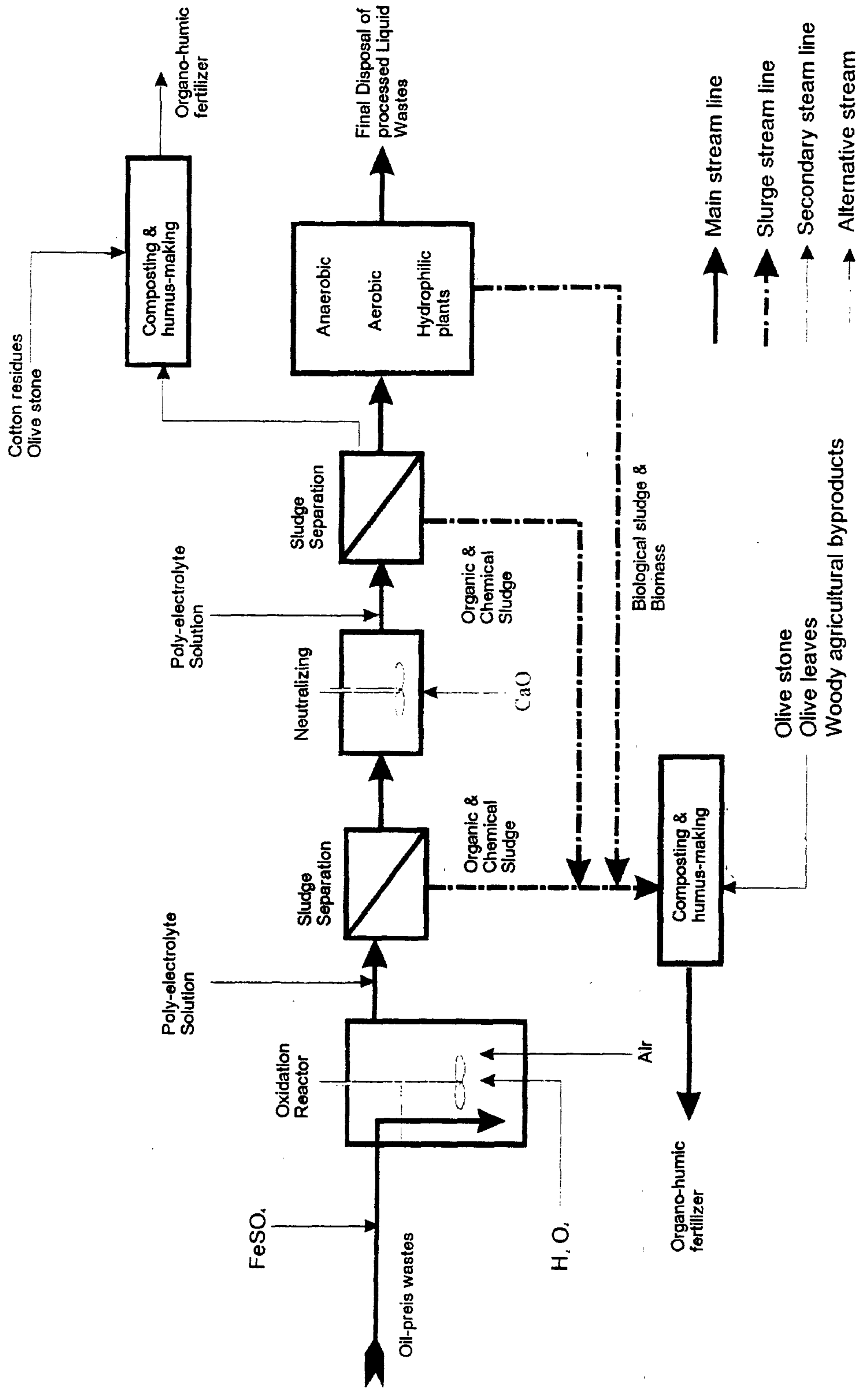
Oil-preis wastes
FeSO4
H2O2
Oxidation Reactor
Air
Poly-electrolyte Solution
Sludge Separation
Organic & Chemical Sludge
Neutralizing
CaO
Poly-electrolyte Solution
Sludge Separation
Organic & Chemical Sludge
Anaerobic
Aerobic
Hydrophilic plants
Final Disposal of processed Liquid Wastes
Biological sludge & Biomass
Cotton residues
Olive stone
Composting & humus-making
Organo-humic fertilizer
Composting & humus-making
Organo-humic fertilizer
Olive stone
Olive leaves
Woody agricultural byproducts
Main stream line
Slurge stream line
Secondary steam line
Alternative stream

Figure 1

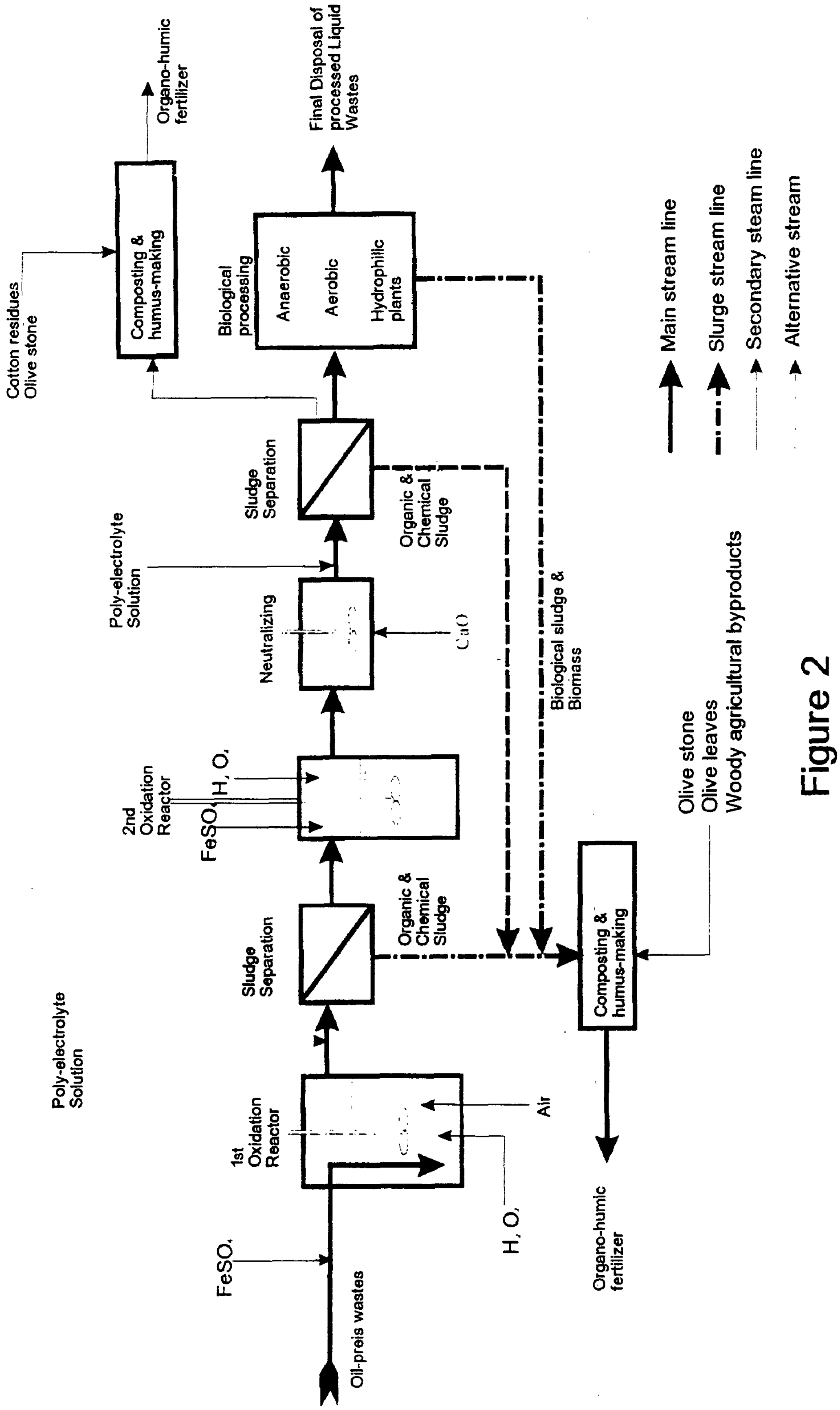
Oil-preis wastes
FeSO4
H2O
Air
1st Oxidation Reactor
Poly-electrolyte Solution
Sludge Separation
Organic & Chemical Sludge
2nd Oxidation Reactor
FeSO4
H2O2
Neutralizing
CaO
Poly-electrolyte Solution
Sludge Separation
Organic & Chemical Sludge
Biological processing
Anaerobic
Aerobic
Hydrophilic plants
Final Disposal of processed Liquid Wastes
Biological sludge & Biomass
Composting & humus-making
Cotton residues
Olive stone
Organo-humic fertilizer
Composting & humus-making
Olive stone
Olive leaves
Woody agricultural byproducts
Organo-humic fertilizer
Main stream line
Slurge stream line
Secondary steam line
Alternative stream

Figure 2

European Patent Office

# EUROPEAN SEARCH REPORT

Application Number
EP 01 60 0012

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.7) |
| X<br><br><br><br><br>A | PATENT ABSTRACTS OF JAPAN<br>vol. 010, no. 235 (C-366),<br>14 August 1986 (1986-08-14)<br>& JP 61 068194 A (HITACHI PLANT ENG & CONSTR CO LTD), 8 April 1986 (1986-04-08)<br>* abstract *<br>--- | 1,4<br><br><br><br><br>2,3,5-14 | C02F1/72 |
| A | EP 0 371 187 A (GELSENWASSER AG)<br>6 June 1990 (1990-06-06)<br>* page 2, line 31 - page 4, line 14; claims 1,16,17 *<br>--- | 1-14 | |
| A | PATENT ABSTRACTS OF JAPAN<br>vol. 009, no. 160 (C-289),<br>4 July 1985 (1985-07-04)<br>& JP 60 034792 A (HITACHI PLANT KENSETSU KK), 22 February 1985 (1985-02-22)<br>* abstract *<br>--- | 1-14 | |
| A | FR 2 591 584 A (AIR LIQUIDE)<br>19 June 1987 (1987-06-19)<br>--- | | TECHNICAL FIELDS SEARCHED (Int.Cl.7) |
| A | EP 0 493 987 A (BETZ EUROP INC)<br>8 July 1992 (1992-07-08)<br>----- | | C02F |

The present search report has been drawn up for all claims

| Place of search | Date of completion of the search | Examiner |
|---|---|---|
| MUNICH | 12 September 2001 | Assogna, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 60 0012

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2001

| Patent document cited in search report | Publication date | Patent family member(s) | Publication date |
|---|---|---|---|
| JP 61068194 A | 08-04-1986 | NONE | |
| EP 0371187 A | 06-06-1990 | DE 3840323 A | 31-05-1990 |
| | | AT 88986 T | 15-05-1993 |
| | | DK 100989 A | 31-05-1990 |
| JP 60034792 A | 22-02-1985 | JP 1017433 B | 30-03-1989 |
| | | JP 1531586 C | 24-11-1989 |
| FR 2591584 A | 19-06-1987 | NONE | |
| EP 0493987 A | 08-07-1992 | CA 2045362 A | 05-07-1992 |

EPO FORM P0459

For more details about this annex : see Official Journal of the European Patent Office, No. 12/82